Europäisches Patentamt

European Patent Office

Office européen des brevets

(19)

(11) Veröffentlichungsnummer: **0 237 944 B1**

(12) **EUROPÄISCHE PATENTSCHRIFT**

(45) Veröffentlichungstag der Patentschrift: **07.01.93**

(21) Anmeldenummer: **87103523.4**

(22) Anmeldetag: **11.03.87**

(51) Int. Cl.5: **C01G 49/06**, C09C 1/24

(54) **Verfahren zur Herstellung von nadelförmigem alpha-Eisen-III-Oxid.**

(30) Priorität: **14.03.86 DE 3608541**

(43) Veröffentlichungstag der Anmeldung:
**23.09.87 Patentblatt 87/39**

(45) Bekanntmachung des Hinweises auf die
Patenterteilung:
**07.01.93 Patentblatt 93/01**

(84) Benannte Vertragsstaaten:
**DE FR GB NL**

(56) Entgegenhaltungen:
**DE-A- 2 849 173**
**DE-A- 3 146 982**
**US-A- 4 464 196**

(73) Patentinhaber: **BASF Aktiengesellschaft**
**Carl-Bosch-Strasse 38**
**W-6700 Ludwigshafen(DE)**

(72) Erfinder: **Arndt, Volker, Dr.**
**Koenigsberger Strasse 1**
**W-6712 Bobenheim-Roxheim(DE)**
Erfinder: **Feser, Rainer, Dr.**
**Colgensteiner Weg 25**
**W-6718 Gruenstadt(DE)**
Erfinder: **Steck, Werner, Dr.**
**Auerstrasse 4**
**W-6700 Ludwigshafen(DE)**
Erfinder: **Jakusch, Helmut, Dr.**
**Lorscher Ring 6c**
**W-6710 Frankenthal(DE)**

EP 0 237 944 B1

Rank Xerox (UK) Business Services

EP 0 237 944 B1

**Beschreibung**

Die vorliegende Erfindung betrifft ein Verfahren zur Herstellung von feinteiligem, dendriten- und porenfreiem $\alpha$-$Fe_2O_3$ aus Eisen(III)-Salzen in Gegenwart von mit Eisen(III)-Ionen komplexbildenden Substanzen in alkalischer Suspension bei Temperaturen zwischen 80 und 250°C sowie dessen Verwendung zur Herstellung von für magnetische Aufzeichnungsträger geeigneten magnetischen Materialien.

Um die für moderne magnetische Aufzeichnungsträger geforderten, hohen Ansprüche an die verwendeten magnetischen Teilchen zu erfüllen, wurden in der letzten Zeit Anstrengungen unternommen, die kristallographischen Eigenschaften dieser Teilchen zu verbessern. Unerwünscht sind speziell feine Löcher, Poren und Hohlräume, da hierdurch die magnetischen Eigenschaften verschlechtert werden, sowie besonders auch die Bildung von Dendriten, da sie das erforderliche gleichmäßige Ausrichten der Teilchen auf dem Aufzeichnungsmedium erschweren oder verhindern und die Packungsdichte erniedrigen.

Als Ausgangsmaterial zur Darstellung von nadelförmigen, magnetischen Teilchen wird im allgemeinen nadelförmiges $\alpha$-$Fe_2O_3$ verwendet. Dieses wird üblicherweise durch Entwässerung von nadelförmigen $\alpha$-FeOOH oder $\gamma$-FeOOH erhalten. Bei diesem Prozeß kommt es zur Ausbildung der oben beschriebenen Nachteile wie Poren, Löcher und Dendriten.

Ein Verfahren zur Darstellung von verbessertem $\alpha$-$Fe_2O_3$ weitgehend ohne die genannten Nachteile wird in der DE-A-28 49 173 und DE-A-31 46 982 vorgeschlagen. Danach erfolgt die direkte Synthese von nadelförmigem $\alpha$-$Fe_2O_3$ aus $Fe(OH)_3$ in alkalischer Suspension in Gegenwart von Wachstumsregulierungsmitteln. Danach wird eine wäßrige Suspension von Eisen(III)-hydroxid in Gegenwart von Wachstumsregulierungsmitteln auf Temperaturen bis 300°C erhitzt. Die Wachstumsregulierungsmittel bestehen aus mit Eisen(III)-Ionen Chelatkomplexe bildenden organischen Verbindungen und verändern die Form des $\alpha$-$Fe_2O_3$-Endproduktes von der normalen Plättchenform zur Nadelform. Diese Komplexbildner reagieren ebenfalls mit anderen Metallkationen, wodurch die Steuerungsfunktion zum Erhalt der Nadelform gestört wird. So führt die Anwesenheit von Kobalt(II)-Ionen bei der Reaktion zu einer deutlichen Verkürzung der Endprodukte, wodurch das Längen-zu-Dicken-Verhältnis erheblich verringert wird.

Außerdem war bekannt, daß durch eine Erhöhung der Feinteiligkeit der für die Herstellung von magnetischen Aufzeichnungsträgern eingesetzten magnetischen Materialien das Partikelrauschen sich verringern läßt. Somit läßt sich aus der Erhöhung der Feinteiligkeit, entsprechend einer Verringerung des Teilchenvolumens durch Senken des Rauschens die nutzbare Dynamik des magnetischen Aufzeichnungsträgers erhöhen. Gleichzeitig kann mit feinteiligeren Pigmenten eine glattere Oberfläche der Magnetschicht erzielt werden und über den so verbesserten Schicht-Kopf-Abstand ein höherer Signalpegel und damit eine weiter gesteigerte Dynamik erreicht werden.

Es bestand nun die Aufgabe, magnetische Materialien bereitzustellen, die diese beiden Verbesserungen vereinen. Aufgabe der Erfindung war es insbesondere, ein feinteiliges, nadelförmiges und porenfreies $\alpha$-$Fe_2O_3$ als Vorstufe für ein daraus herzustellendes magnetisches Material mit den beschriebenen, vorteilhaften Eigenschaften bereitzustellen.

Es wurde nun überraschenderweise gefunden, daß sich die gestellte Aufgabe mit einem Verfahren zur Herstellung von feinteiligem, nadelförmigem $\alpha$-$Fe_2O_3$ durch Erhitzen einer alkalischen, wäßrigen Suspension von Eisen(III)-hydroxid in Gegenwart mindestens einer mit Eisen(III)ionen Komplexe bildenden organischen Verbindung auf Temperaturen zwischen 80 und 250°C lösen läßt und ein besonders feinteiliges nadelförmiges, poren- und den-dritenfreies $\alpha$-$Fe_2O_3$ erhalten wird, wenn ein mit Zinn(IV)ionen modifiziertes Eisen(III)hydroxid eingesetzt wird.

Bei der Ausarbeitung des erfindungsgemäßen Verfahrens wurde überraschenderweise festgestellt, daß bei Anwesenheit von Zinn der bekannte störende Einfluß anderer Kationen, wie z.B. Chrom(III) oder Aluminium(III) keinen nachteiligen Effekt mehr ausübt. Es wurden ebenfalls deutlich feinteiligere Produkte erhalten. Dies ist besonders für die technische Anwendung des Verfahrens bedeutsam, da die Reinheitsanforderungen an das Ausgangsprodukt dadurch gesenkt werden können. Es führt bei verbesserten Produkten zu einer Kostensenkung des Verfahrens. Darüberhinaus wird die Anwendungsbreite des Verfahrens deutlich vergrößert, da durch gleichzeitige Anwesenheit weiterer Kationen die Feinteiligkeit in gezielter Weise variiert werden kann und auch Zwischenwerte eingestellt werden können.

Gemäß der Erfindung werden das Eisen(III)-und das Zinn(IV)-Salz aus wäßriger Lösung als Hydroxid gemeinsam ausgefällt. Die Menge des zugegebenen Zinn(IV)salzes wird zweckmäßigerweise zwischen $10^{-3}$ bis $2 \cdot 10^{-2}$ Mol je Mol Eisen(III)salz gewählt. Als besonders vorteilhaft haben sich pH-Werte von 7,5 bis 8,0 und Temperaturen um 60°C herausgestellt. Die Suspension wird bei erhöhter Temperatur nachgerührt. Als vorteilhaft hat sich ein Nachrühren von etwa 5 Stunden bei 60°C und ein ein- oder mehrmaliges Resuspendieren der Suspension nach Filtration herausgestellt. Dies erfolgt in kaltem Wasser. Bei Verwendung von warmem Wasser wird die Nachrührzeit entsprechend gekürzt. Das so erhaltene Eisen(III)hydroxid

2

wird in Wasser suspendiert, mit dem oder den Komplexbildnern versehen und der pH-Wert eingestellt. Die Eisenkonzentration ist hierbei nach unten durch den praktischen Nutzen und nach oben durch die Rührfähigkeit der Suspension begrenzt und wird zweckmäßigerweise auf 0,4 bis 1,4 Mol/l eingestellt. Der pH-Wert beträgt 8,5 bis 12, besonders bevorzugt ist ein Wert von 10,5 bis 11,5. Als die Kristallform beeinflussende Komplexbildner werden mit Eisen(III)-Ionen Chelatkomplexe bildende Substanzen verwendet. Insbesondere eignen sich hierfür $\alpha$-Hydroxycarbonsäuren und organische Phosphonsäuren. Innerhalb dieser Gruppen haben sich Citronensäure, Weinsäure und 1-Hydroxyethan-1,1-diphosphonsäure besonders bewährt. Ihre Konzentration richtet sich nach der Eisenkonzentration, dem pH-Wert und der erwünschten Endproduktgeometrie. Bevorzugter Bereich ist eine Gesamtkonzentration von $10^{-3}$ bis $10^{-2}$ Mol/l. Die Suspension wird erfindungsgemäß auf eine Endtemperatur von 80 bis 250°C, insbesondere 90 bis 190°C unter Rühren aufgeheizt. Dies kann durch schnelles Aufheizen auf die Endtemperatur, schnelles Aufheizen auf einen Schwellenwert und anschließendes langsames Aufheizen auf die Endtemperatur oder langsames Aufheizen auf die Endtemperatur erfolgen.

Nach beendeter Synthese wird das nadelförmige, feinteilige, porenfreie $\alpha$-Fe$_2$O$_3$ filtriert, gewaschen und getrocknet. Es kann vor der weiteren Verarbeitung in an sich bekannter Weise mit einem formstabilisierenden Überzug versehen werden. Anschließend wird es in an sich bekannter Weise in einer reduzierenden Atmosphäre, z.B. in Wasserstoff und/oder mittels organischer Substanzen, die sich in Gegenwart von Eisenoxiden zersetzen, zu Magnetit reduziert, wobei in allen Fällen die gleichzeitige Anwesenheit von Wasserdampf zur Vermeidung einer Reduktion zu metallischen Phasen zweckmäßig ist. Je nach Reduktionsmittel und Dauer, die zwischen 20 Minuten und 3 Stunden liegen kann, erwiesen sich Reduktionstemperaturen zwischen 300 und 500°C als geeignet.

Der als Zwischenstufe erhaltene Magnetit läßt sich in an sich bekannter Weise mit oxidierenden Gasen, wie z.B. Sauerstoff oder Luft, bei Temperaturen zwischen 180 und 350°C oxidieren. Abhängig von der jeweiligen Oxidationstemperatur haben sich Zeiten von 10 Minuten bis 1 Stunde als zweckmäßig erwiesen. Dabei sind die Oxidationsbedingungen so zu wählen, daß die bekannte irreversible Umwandlung von $\gamma$-Fe$_2$O$_3$ zu $\alpha$-Fe$_2$O$_3$ vermieden wird.

Die so erhaltenen Magnetpigmente können je nach Anwendungszweck in bekannter Weise zur Erhöhung der Koerzitivfeldstärke an der Oberfläche mit Kobalt- oder Kobalt/Eisen(II)-Ionen modifiziert werden.

Ebenso ist es möglich, die gegebenenfalls formstabilisierten oder in bekannter Weise modifizierten Ausgangspigmente durch Erhöhung des Reduktionspotentials über die Stufe des Magnetits hinaus zu reduzieren und die so erhaltenen Metallpigmente nach geeigneter Passivierung mittels organischer Lösungsmittel oder durch vorsichtiges Überleiten von Luft direkt als Magnetpigment zu verwenden.

Wesentlicher Verwendungszweck der aus den erfindungsgemäß hergestellten $\alpha$-Fe$_2$O$_3$-Pigmenten gewonnenen Magnetpigmente stellt der Einsatz als magnetisches Material bei der Herstellung von magnetischen Aufzeichnungsträgern dar.

Die Herstellung der Aufzeichnungsträger geschieht in an sich bekannter Weise. Hierzu werden die magnetischen Materialien in polymeren Bindemitteln dispergiert. Als Bindemittel eignen sich die für diesen Zweck bekannten Verbindungen, wie Homo- und Mischpolymerisate von Vinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die vorliegende Erfindung wird anhand folgender Beispiele erläutert. Die angegebenen Prozentgehalte beziehen sich als Gew.% auf die Gesamtverbindung. Die magnetischen Werte der Pulverproben wurden mit einem Schwingmagnetometer bei einem magnetischen Feld von 160 kA/m oder nach Vormagnetisierung im Impulsmagnetisierer in einem Schwingmagnetometer gemessen. Die Werte der Koerzitivfeldstärke, Hc, gemessen in [kA/m]• wurden bei den Pulvermessungen auf eine Stopfdichte von $\rho$ =1,2 g/cm$^3$ bezogen. Spezifische Remanenz (Mr/$\rho$) und Sättigung (Mm/$\rho$) sind jeweils in [nTm$^3$/g] angegeben. Die Sättigung bzw. Remanenz von Bändern werden in mT angegeben. Die Geometrie der Produkte wurde aus elektronenmikroskopischen Aufnahmen bei einer Vergrößerung von 1:20000 entnommen. Hierbei bezeichnet Nadel eine längliche Form und nicht die Ausbildung spitzer Enden, also auch Rechtecke usw. Die Bestimmung der spezifischen Oberfläche (SN$_2$) geschieht nach DIN 66132 mittels eines Ströhlein-Areameters (Firma Ströhlein, Düsseldorf, BRD) nach dem Einpunkt-Differenz-Verfahren nach Haul und Dümbgen.

Beispiel 1

5 Mol Fe(NO$_3$)$_3$•9 H$_2$O und 0,04 Mol SnCl$_4$ wurden in 15 l Wasser gelöst und bei 60°C unter Rühren mit 10 %iger Natronlauge versetzt bis der pH-Wert 8,0 betrug. Die erhaltene Suspension von dotiertem Eisen(III)hydroxid (im folgenden "Fe(OH)$_3$") wurde 5 Stunden bei 60°C nachgerührt und über eine Filterpresse filtriert. Der Niederschlag wurde einmal in kaltem Wasser resuspendiert und erneut über die Filterpresse filtriert. Die so erhaltenen Fällungen dienen als Ausgangsprodukt für die folgenden Beispiele.

Beispiele 1.1 bis 1.7

Der nach Beispiel 1 erhaltene Niederschlag wurde in Wasser suspendiert. Hierbei wurde eine bestimmte "Eisenkonzentration" eingestellt, die als Mol "Fe(OH)$_3$" pro Liter Suspension definiert wird. Anschließend wurde die Suspension mit dem oder den Komplexbildnern versetzt und der gewünschte pH-Wert mit Natronlauge eingestellt. Die fertige Reaktionsmischung wurde unter Rühren auf höhere Temperaturen erhitzt, wobei bei Temperaturen über 100°C ein Autoklav, bei Temperaturen unter 100°C eine mit Kunststoff ausgekleidete Glasapparatur verwendet wurde. Die genauen Bedingungen der Versuche sind in Tabelle 1 aufgeführt. Das fertige Produkt wurde filtriert und getrocknet. Es wurde jeweils röntgenreines, nadelförmiges und porenfreies $\alpha$-Fe$_2$O$_3$ erhalten.

## Tabelle 1

| Bei-spiel | Eisen-Konz. [Mol/l] | pH | Komplexbildner [mMol/l][1] | Temp.-Profil[2] | SN$_2$ [m$^2$/g] | $\overline{l}$ [$\mu$m] | l/d |
|---|---|---|---|---|---|---|---|
| 1.1 | 1,35 | 11,3 | 0,87 We, 3,00 Ci | 3 | 31,2 | 0,20 | 6,0 |
| 1.2 | 1,35 | 10,8 | 0,87 We, 3,00 Ci | 3 | 31,1 | 0,18 | 5,0 |
| 1.3 | 0,45 | 10,8 | 0,90 Ci, 1,70 Ph | 1 | 32,3 | 0,40 | 10,0 |
| 1.4 | 0,45 | 10,8 | 0,90 Ci, 1,70 Ph | 2 | 30,7 | 0,30 | 9,0 |
| 1.5 | 0,45 | 10,8 | 1,30 Ci, 1,00 Ph | 1 | 33,0 | 0,30 | 10,0 |
| 1.6 | 0,45 | 11,3 | 0,87 We, 2,55 Ci | 1 | | 0,25 | 5,6 |
| 1.7 | 0,45 | 10,8 | 2,30 Ph | 1 | | 0,30 | 9,0 |

[1] We = Weinsäure, Ci = Citronensäure,
Ph = 1-Hydroxyethan-1,1-diphosphonsäure,

[2] Temperaturprofil bedeutet:

1 = Aufheizen von 20 auf 170°C in 10 Stunden,

2 = Reaktion 6 Stunden bei 170°C und

3 = schnelles Aufheizen auf 70°C, anschließendes langsames Aufheizen in 60 Stunden auf 100°C und 20 Stunden Nachrühren bei 100°C.

Beispiel 2

Es wurden 5 Mol Fe(NO$_3$)$_3$·9H$_2$O und 0,02 Mol SnCl$_4$ wie in Beispiel 1 beschrieben gefällt und aufgearbeitet. Der so erhaltene Niederschlag wurde unter den Bedingungen von Beispiel 1.6 zur Synthese eingesetzt und lieferte feinteilige, porenfreie $\alpha$-Fe$_2$O$_3$-Nadeln mit l = 0,20$\mu$m und l/d = 4,0.

Beispiel 3

Es wurden 5 Mol Fe(NO$_3$)$_3$·9H$_2$O und 0,06 Mol SnCl$_4$ wie in Beispiel 1 beschrieben gefällt und aufgearbeitet. Der so erhaltene Niederschlag wurde unter den Bedingungen von Beispiel 1.6 zur Synthese eingesetzt und lieferte feinteilige, porenfreie $\alpha$-Fe$_2$O$_3$-Nadeln mit l = 0,18$\mu$m und l/d = 4,5.

Beispiel 4

Es wurden 5 Mol Fe(NO$_3$)$_3$·9H$_2$O, 0,04 Mol SnCl$_4$ und 0,04 Mol AlCl$_3$·6H$_2$O wie in Beispiel 1 beschrieben gefällt und aufgearbeitet.

Beispiel 4.1 bis 4.2

Der in Beispiel 4 erhaltene Niederschlag wurde unter den in Tabelle 2 aufgeführten Bedingungen zur Synthese eingesetzt und lieferte feinteilige, porenfreie $\alpha$-Fe$_2$O$_3$-Nadeln.

Tabelle 2

| Bei-spiel | Eisen-Konz. [Mol/l] | pH | Komplexbildner [mMol/l][1] | Temp.-Profil[2] | $S_{N_2}$ [m$^2$/g] | $\bar{l}$ [$\mu$m] |
|---|---|---|---|---|---|---|
| 4.1 | 1,35 | 11,3 | 0,87 We, 3,00 Ci | 3 | 27,4 | 0,23 |
| 4.2 | 0,45 | 10,8 | 0,90 Ci, 1,70 Ph | 1 | 26,9 | 0,35 |

Beispiel 5

Es wurden 5 Mol Fe(NO$_3$)$_3$·3H$_2$O, 0,04 Mol SnCl$_4$ und 0,02 Mol CrCl$_3$·6H$_2$O wie in Beispiel 1 beschrieben gefällt und aufgearbeitet.

Beispiel 5.1 bis 5.2

Der in Beispiel 4 erhaltene Niederschlag wurde unter den in Tabelle 3 aufgeführten Bedingungen zur Synthese eingesetzt und lieferte feinteilige, porenfreie $\alpha$-Fe$_2$O$_3$-Nadeln.

Tabelle 3

| Bei-spiel | Eisen-Konz. [Mol/l] | pH | Komplexbildner [mMol/l][1] | Temp.-Profil[2] | $S_{N_2}$ [m$^2$/g] | $\bar{l}$ [$\mu$m] |
|---|---|---|---|---|---|---|
| 5.1 | 1,35 | 11,3 | 0,87 We, 3,00 Ci | 3 | 25,1 | 0,30 |
| 5.2 | 0,45 | 11,3 | 0,87 We, 2,60 Ci | 1 | 23,6 | 0,20 |

Beispiel 6

Es wurden 5 Mol Fe(NO$_3$)$_3$·9H$_2$O und 0,08 Mol SnCl$_4$ gemäß Beispiel 1 gefällt und 30 Minuten bei 60°C nachgerührt. Der Niederschlag wurde viermal in heißem Wasser resuspendiert und filtriert. Der so erhaltene Niederschlag wurde unter den Bedingungen von Beispiel 1.6 zur Synthese eingesetzt und lieferte feinteilige, porenfreie $\alpha$-Fe$_2$O$_3$-Spindeln mit l = 0,10$\mu$m und l/d = 2,5.

Vergleichsversuche 1 bis 8

Es wurden 5 Mol Fe(NO$_3$)$_3$·9H$_2$O und X Mol AlCl$_3$·6H$_2$O oder CrCl$_3$·6H$_2$O (siehe Tabelle 4) wie in Beispiel 1 beschrieben gefällt und aufgearbeitet. Diese Niederschläge wurden unter den Bedingungen gemäß Tabelle 4 zur Synthese eingesetzt und lieferten porenfreie $\alpha$-Fe$_2$O$_3$-Produkte (Ausnahme V 6 mit $\alpha$-FeOOH-Dendriten) mit steigendem Durchmesser bei steigender Dotierungsmenge.

Vergleichsversuche 9 bis 10

Es wurden 5 Mol Fe(NO$_3$)$_3$·9H$_2$O wie in Beispiel 1 beschrieben gefällt, über die Filterpresse filtriert und viermal in kaltem Wasser resuspendiert und filtriert. Der so erhaltene Niederschlag wurde unter den in Tabelle 4 aufgeführten Bedingungen zur Synthese eingesetzt und lieferte porenfreies $\alpha\text{-}Fe_2O_3$.

## Tabelle 4

| Beispiel | Dotierung [x Mol] | Eisen-Konz. [mMol/l] | Temp.-Profil | $SN_2$ [m²/g] | Elmi Form. | $\bar{l}$ [μm] |
|---|---|---|---|---|---|---|
| V 1 | 0,0148 Al | 1,35 | 3 | 16,2 | Nadeln | 0,23 |
| V 2 | 0,037 Al | 1,35 | 3 | 14,8 | Nadeln | 0,30 |
| V 3 | 0,148 Al | 1,35 | 3 | 11,2 | Nadeln | 0,36 |
| V 4 | 0,0078 Cr | 1,35 | 3 | 15,8 | Nadeln | 0,25 |
| V 5 | 0,0193 Cr | 1,35 | 3 | 10,4 | Nadeln | 0,34 |
| V 6 | 0,0769 Cr | 1,35 | 3 | 12,8 | Nadeln mit feinen Dendriten | 0,35 0,30 |
| V 7 | 0,037 Al | 0,45 | 1 | 13,0 | Spindeln | |
| V 8 | 0,0193 Cr | 0,45 | 1 | 12,9 | Nadeln | 0,50 |
| V 9 | - | 1,35 | 3 | 16,3 | Nadeln | 0,25 |
| V 10 | - | 0,45 | 1 | 11,0 | Nadeln | 0,29 |

pH-Wert = 11,3, 0,87 mMol/l Weinsäure, 3,0 mMol/l Citronensäure

### Beispiel A1

80 g des Produktes aus Beispiel 1.5 wurden mit 2,5 % Stearinsäure versetzt und in einem Drehrohrofen 30 Minuten bei 380°C in einem Wasserstoff/Stickstoffstrom (1:1) zu Magnetit reduziert. Vor dem Eintritt in das Reduktionsrohr wurde der $H_2$-Strom durch Wasser mit einer Temperatur von 60°C bis 80°C hindurchgeleitet. Nach beendeter Reduktion wurde die Magnetitprobe in einem Ofen gleicher Bauart 30 Minuten bei 280°C mit Luft zu $\alpha\text{-}Fe_2O_3$ oxidiert. Das Produkt hatte eine Koerzitivfeldstärke von 18,6 kA/m und eine spezifische Remanenz von 41,7 nTm³/g.

Das so erhaltene Magnetpigment wurde in üblicher Weise an der Oberfläche mit 4,5 % Co und 13,5 % Fe(II) in Form ihrer Hydroxide durch vierstündiges Rühren bei 50°C und einem pH-Wert größer 12 ausgerüstet, filtriert, getrocknet und für eine Stunde bei 200°C unter Stickstoff getempert. Das fertige Produkt hatte eine Koerzitivfeldstärke von 47,0 kA/m und eine spezifische Remanenz von 45,1 nTm³/g.

### Beispiel A2

80 g des Produktes aus Beispiel 1.5 wurden durch Erhitzen in verdünnter Phosphorsäure mit einem Überzug aus 0,8 % Posphat versehen, filtriert, getrocknet und anschließend wie in Beispiel A1 beschrieben, jedoch bei einer Reduktionstemperatur von 450°C, in $\alpha\text{-}Fe_2O_3$ umgewandelt. Das Produkt hatte eine Koerzitivfeldstärke von 22,8 kA/m und eine spezifische Remanenz von 38,8 nTm³/g.

Das so erhaltene Magnetpigment wurde in üblicher Weise an der Oberfläche mit einem Überzug von 0,8 % Co in Form des Hydroxids durch vierstündiges Rühren bei 95°C und einem pH-Wert größer 12 ausgerüstet, filtriert und getrocknet. Das fertige Produkt hatte eine Koerzitivfeldstärke von 27,7 kA/m und eine spezifische Remanenz von 38,5 nTm³/g.

### Beispiel A3

Das in Beispiel 1.3 hergestellte Produkt wurde in wäßriger Suspension unter Zugabe von Wasserglas-Lösung mit 1,8 % $SiO_2$ ausgerüstet, filtriert und getrocknet. Anschließend wurde es mittels Wasserstoff bei 440°C für 8 Stunden reduziert. Das erhaltene pyrophore Metallpigment wurde mit THF passiviert. Das passivierte Produkt hatte folgende Eigenschaften:

$H_c$ = 76,2 kA/m, Mm/$\rho$ = 121 nTm$^3$/g.

Bei Reduktion bei anderen Temperaturen ergaben sich für das passivierte Produkt folgende Werte:

410°C $H_c$ = 72,2 kA/m, 425°C $H_c$ = 83,7 kA/m.

**Patentansprüche**

1. Verfahren zur Herstellung von nadelförmigem $\alpha$-$Fe_2O_3$ durch Erhitzen einer alkalischen, wäßrigen Suspension von Eisen(III)hydroxid in Gegenwart mindestens einer mit Eisen(III)ionen Komplexe bildenden organischen Verbindung auf Temperaturen zwischen 80 und 250°C, dadurch gekennzeichnet, daß ein mit Zinn(IV)ionen modifiziertes Eisen(III)hydroxid eingesetzt wird.

2. Verfahren gemäß Anspruch 1, dadurch gekennzeichnet, daß zur Modifizierung des Eisen(III)hydroxids $10^{-3}$ bis $2 \cdot 10^{-2}$ Mol Zinn(IV)salz pro Mol Eisen(III)salz eingesetzt werden.

3. Verfahren gemäß Anspruch 1 oder 2, dadurch gekennzeichnet, daß der pH-Wert der Suspension 8,5 bis 12 beträgt.

4. Verfahren gemäß Anspruch 1, dadurch gekennzeichnet, daß die mit Zinn(IV)ionen modifizierten Eisen-(III)hydroxid-Fällung nach einer ersten Filtration vor dem Erhitzen in Gegenwart mindestens einer mit Eisen(III)ionen-Komplexe bildenden organischen Verbindung bei einer 100°C nicht übersteigenden Temperatur mindestens einmal unter Rühren suspendiert und erneut filtriert wird.

5. Verfahren nach einem der Ansprüche 1 bis 4, dadurch gekennzeichnet, daß das Eisen(III)hydroxid neben den Zinn(IV)ionen noch Chrom(III)- und/oder Aluminium(III)ionen enthält.

**Claims**

1. A process for the preparation of acicular $\alpha$-$Fe_2O_3$ by heating an alkaline, aqueous suspension of iron-(III) hydroxide in the presence of one or more organic compounds which form complexes with iron(III) ions, at from 80 to 250°C, wherein an iron(III) hydroxide modified with tin(IV) ions is used.

2. A process as claimed in claim 1, wherein from $10^{-3}$ to $2 . 10^{-2}$ mole of tin(IV) salt per mole of iron(III) salt is used for modifying the iron(III) hydroxide.

3. A process as claimed in claim 1 or 2, wherein the pH of the suspension is from 8.5 to 12.

4. A process as claimed in claim 1, wherein, after a first filtration and before being heated in the presence of one or more organic compounds which form complexes with iron(III) ions, the iron (III) hydroxide precipitate modified with tin(IV) ions is suspended one or more times, while stirring, at a temperature not exceeding 100°C, and the said precipitate is filtered off again.

5. A process as claimed in any of claims 1 to 4, wherein the iron(III) hydroxide contains chromium(III) and/or aluminum(III) ions in addition to the tin(IV) ions.

**Revendications**

1. Procédé de préparation d'un alpha-$Fe_2O_3$ aciculaire par chauffage d'une suspension aqueuse alcaline d'hydroxyde de fer-III en présence d'au moins un composé organique formant des complexes avec les ions fer-III à des températures de 80 à 250 degrés C, caractérisé en ce que l'on met en oeuvre un hydroxyde de fer-III modifié par des ions étain-IV.

2. Procédé selon la revendication 1, caractérisé en ce que, pour la modification de l'hydroxyde de fer-III, on utilise de $10^{-3}$ à $2 \times 10^{-2}$ mol de sel d'étain-IV par mol de sel de fer-III.

3. Procédé selon la revendication 1 ou 2, caractérisé en ce que le pH de la suspension va de 8,5 à 12.

4. Procédé selon la revendication 1, caractérisé en ce que, après une première filtration et avant chauffage en présence d'au moins un composé organique formant des complexes avec les ions fer-III, on remet le précipité d'hydroxyde de fer-III modifié par des ions étain-IV encore au moins une fois en suspension, sous agitation, à une température ne dépassant pas 100 degrés C et on filtre à nouveau.

5. Procédé selon l'une des revendications 1 à 4, caractérisé en ce que l'hydroxyde de fer-III, en plus des ions étain-IV, contient encore dans des ions chrome-III et/ou aluminium-III.